# EUROPÄISCHE PATENTSCHRIFT

(11) **EP 0 681 097 B1**
(45) Veröffentlichungstag und Bekanntmachung des Hinweises auf die Patenterteilung: **27.12.1996**
(21) Anmeldenummer: 95101543.7
(22) Anmeldetag: 06.02.1995
(51) Int. Cl.: F01N 7/18, F16L 27/10

(54) **Gelenkiges Verbindungselement für Rohrteile**
Flexible connecting element for tubular parts
Elément de connexion flexible pour éléments tubulaires

(30) Priorität: 06.05.1994 DE 4415991
(43) Veröffentlichungstag der Anmeldung: 08.11.1995
(73) Patentinhaber: Witzenmann GmbH Metallschlauch-Fabrik Pforzheim, D-75175 Pforzheim (DE)
(72) Erfinder: Pluschke, Michael, D-75305 Neuenbürg-Rotenbach (DE)
(74) Vertreter: Lemcke, Rupert, Dipl.-Ing.

(56) Entgegenhaltungen:
- EP-A- 0 575 727
- EP-B- 0 208 128
- DE-A- 2 701 022
- DE-A- 3 727 915
- US-A- 4 570 440

## Beschreibung

Die Erfindung betrifft ein gelenkiges Verbindungselement für Rohrteile, insbesondere Rohrteile von Abgasleitungen der Verbrennungsmotore von Kraftfahrzeugen, bestehend aus mindestens einem flexiblen, wenigstens mittelbar mit den Rohrteilen dicht verbundenen Leitungselement sowie einem innerhalb oder außerhalb des Leitungselementes angeordneten, mit den Rohrteilen zumindest mittelbar verbundenen Stützrohr, von dem wenigstens ein Ende mit dem diesem benachbarten Rohrteil über mindestens ein Stützpolster mit gedämpft federnden Eigenschaften sowie ein dieses umschließendes Stützteil in angular zueinander beweglich geführter, gegenseitig tragender Verbindung steht, wobei das Stützpolster beidseits in Axial- und Radialrichtung gegen das Stützrohr und/oder das Stützteil in Anlage ist.

Derartige gelenkige Verbindungselemente werden zwischen zwei in der Regel im wesentlichen miteinander fluchtende Rohrteile von Rohrleitungen eingesetzt, um Angularbewegungen und auch Axialbewegungen zwischen den Rohrteilen in wenn auch oft nur in geringem Maße zuzulassen sowie eine gegenseitige Abkopplung bezüglich der Übertragung von Schwingungen und Geräuschen zwischen den Rohrteilen zu ergeben. Ein hier besonders in Frage kommendes Anwendungsgebiet sind die Abgasleitungen von Verbrennungsmotoren bei Kraftfahrzeugen, auf die nachfolgend im wesentlichen Bezug genommen wird, ohne damit den Anwendungsbereich des Gegenstandes der Erfindung zu beschränken.

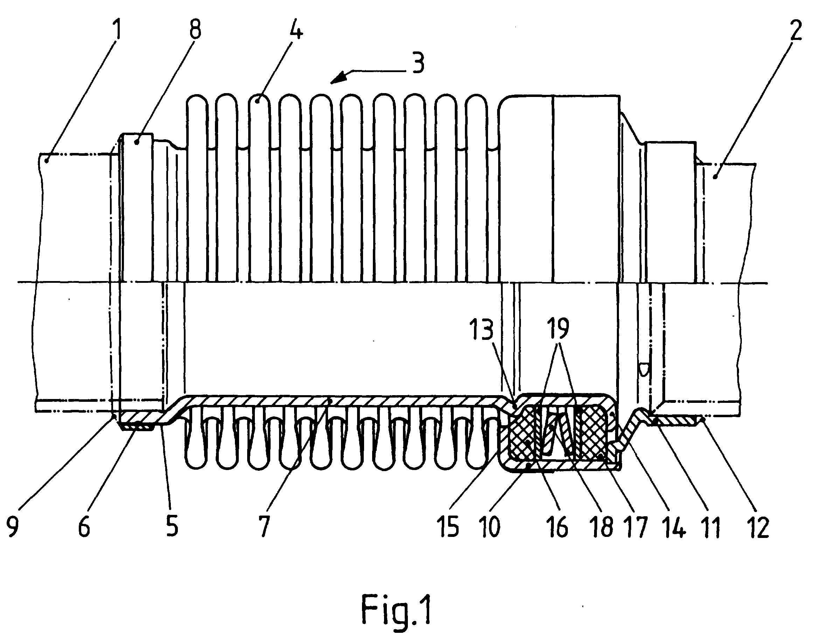

Ein gelenkiges Verbindungselement der eingangs genannten Gattung ist durch die EP-PS-0 208 128 bekannt. Daraus ist ersichtlich (Figur 1), daß die Rohrteile Glattrohre bzw. deren Enden sein können, dafür aber genausogut die Verwendung von Anschlußflanschen etc. in Frage kommt. Der Querschnitt der Rohrteile ist in der Regel kreisförmig und koaxial zum entsprechend ebenfalls kreisförmigen Leitungselement. Es sind jedoch auch andere Querschnitte denkbar, beispielsweise ein ovaler Querschnitt der Rohrteile mit entsprechend angepaßtem Querschnitt des Leitungselementes. Es kommt auch ein ovaler oder polygonaler Querschnitt des Leitungselementes in Frage beispielsweise dann, wenn die Abgasanlage zweiflutig oder mehrflutig ausgebildet ist, wobei dann die so gebildeten Strömungskanäle durch ein flexibles Leitungselement dicht umgeben werden (Figur 1 und 10 der EP-PS-0 208 128).

Was das flexible Leitungselement betrifft, so kommen für dieses die Form eines ein- oder mehrlagigen Wellrohres, Balges, dichtgewickelten Schlauches oder dergleichen in Frage, wobei sich die Materialwahl nach den gegebenen Anforderungen richtet. Bei Abgasleitungen von Kraftfahrzeugen findet Metall zur Ausbildung des Leitungselementes Verwendung.

Was die Zahl der Gelenkstellen des gattungsmäßigen Verbindungselementes betrifft, so ist vielfach eine Gelenkstelle ausreichend. Es können jedoch auch zwei Gelenkstellen, eine am jeden Ende des Stützrohres in untereinander gleicher Weise ausgebildet sein, um den resultierenden Gelenkpunkt möglichst in die Längsmitte der Achse des Leitungselementes zu legen und dieses damit geringstmöglich zu belasten. Um eine weitere Vergrößerung insbesondere der Angularbeweglichkeit zweier aufeinander zugerichteter Rohrteile zu erreichen, können auch mehrere Verbindungselemente der vorbeschriebenen Art hintereinander angeordnet werden. Beispiele hierfür zeigt die EP-A-0 580 963.

Sind bei durch das Verbindungselement aneinandergekoppelten Rohrteilen gegenseitige Torsionsbewegungen zu erwarten, die von einem Leitungselement der hier in Frage kommenden Art nur schlecht abgestützt werden können, so besteht bei einem Verbindungselement der eingangs genannten Gattung die Möglichkeit, das jeweilige Stützrohrende im Bereich der durch das Stützpolster gebildeten Gelenkstelle mechanisch gegenüber dem benachbarten Rohrteil bzw. Stützteil in Umfangsrichtung beispielsweise durch eine formschlüssige Verbindung abzustützen, die die Gelenkarbeit des Verbindungselementes nicht beeinträchtigt. Beispiele hierfür sind der DE-A-42 19 241 zu entnehmen.

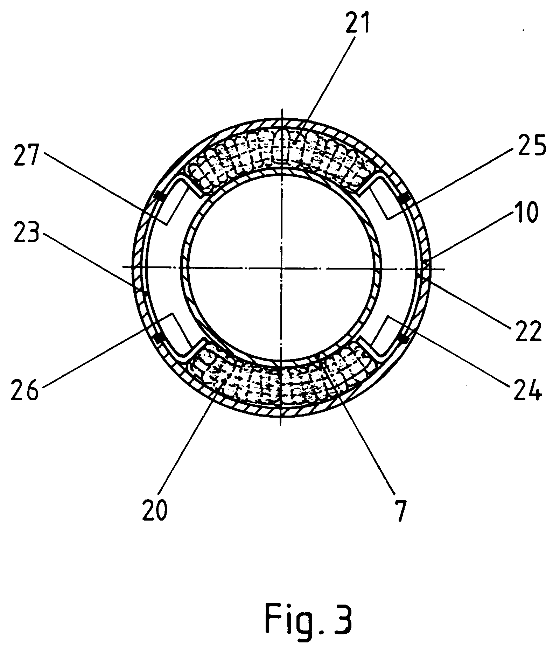

Was die Ausbildung und Anordnung des Stützrohres in Verbindung mit der Bildung der Gelenkstelle betrifft, so kann das Stützrohr innerhalb des Leitungselementes angeordnet sein, wie dies bei den Gegenständen der bisher genannten Vorveröffentlichungen geschieht. Es besteht jedoch auch die Möglichkeit, das Stützrohr nach außerhalb des Leitungselementes zu legen, wie dies die Ausführungsform gemäß Figur 3 des DE-GM 93 01 772 zeigt. In einem Falle ist dabei das Stützteil außenliegend und mit dem benachbarten Rohrteil verbunden, während im letztgenannten Falle das Stützteil nur mit dem Stützrohr verbunden ist, während das Stützpolster innen auf einem mit dem benachbarten Rohrteil verbundenen Rohrstück sitzt.

Hinsichtlich der Ausbildung des Stützpolsters sind diese aus einem Geflecht, Gewirke, Gestricke oder dergleichen gepreßte Teile, die auch zur Abdichtung mit Graphit imprägniert sein können, wobei als Material in der Regel Metalldraht Verwendung findet, je nach Temperatur- bzw. sonstiger Belastung jedoch auch andere Materialien in Frage kommen. Das Stützpolster der jeweiligen Gelenkstelle kann ein das Stützrohr umschließender bzw. in das Stützteil eingesetzter, geschlossener Ring sein. Es können jedoch auch über den Umfang verteilte Ringsegmente oder bei angepaßter Konstruktion andere Teileformen Verwendung finden, um insbesondere das Gelenk nicht zu steif auszubilden bzw. auf die Gelenksteifigkeit einen bestimmten Einfluß zu nehmen. Selbstverständlich liegt es in diesem Rahmen, beispielsweise zwei ringförmige Stützpolster oder zwei derartige Ringsegmente axial nebeneinander anzuordnen, wobei beispielsweise die Stützpolsterringe durch eine radiale Auffaltung des Stützrohres in axialem Abstand gehalten sein können.

Nachteilig ist bei all diesen Bauformen jedoch, daß das oder die Stützpolster als verhältnismäßig steifes Bauteil innerhalb der Gelenkstelle nur eine geringe Axialbeweglichkeit der über das Polster gegeneinander abgestützten Teile erlauben. Andererseits setzt sich bei der Gelenkarbeit das Material des oder der Stützpolster, wodurch sich eine Lose oder doch zumindest eine Veränderung der Federungskennlinie des oder der Stützpolster ergibt. Letzteres wird durch Verschleiß der innerhalb des Gelenkes gegeneinander beweglichen Teile noch zusätzlich beeinflußt. Damit geht dann eine Verringerung des angestrebten Dämpfungsgrades einher.

Um den genannten Toleranzen entgegenzuwirken, ist nach der EP-A-0 575 727 vorgesehen, das oder die Stützpolster beim Zusammenbau der jeweiligen Gelenkstelle durch die das oder die Stützpolster tragenden Teile axial vorzuspannen. Diese Maßnahme hat sich jedoch als nicht ausreichend erwiesen, da auch dann das erwähnte Setzverhalten wieder auftritt und verschleißbedingte Änderungen nicht beseitigt werden können.

Aufgabe der Erfindung ist es daher, für ein gelenkiges Verbindungselement der eingangs genannten Art die Konstruktion der Gelenkstelle so abzuändern bzw. zu ergänzen, daß sowohl die Axialbeweglichkeit der Gelenkstelle vergrößert wird als auch dem Setzverhalten und dem Verschleiß bezüglich seiner Auswirkungen entgegengetreten ist.

Diese Aufgabe ist erfindungsgemäß dadurch gelöst, daß das Stützpolster durch wenigstens ein an ihm angreifendes, vorgespanntes Federelement druckbeaufschlagt ist, wobei das Stützpolster in Axialrichtung und/oder Radialrichtung der gelenkigen Verbindung druckbeaufschlagt sein kann.

Durch diese Maßnahmen erhält das Stützpolster und damit die Gelenkstelle innerhalb des Weges des Federelementes eine Axialbeweglichkeit bzw. Axialverschiebbarkeit, die durch Auswahl und Dimensionierung des Federelementes auf die jeweiligen Anforderungen abgestimmt werden kann. Außerdem kann nunmehr durch das Federelement das Setzverhalten des Stützpolsters sowie dessen verschleißbedingte Formänderung kompensiert werden, ohne daß sich dadurch eine nennenswerte Änderung der Federcharakteristik ergibt.

Bezüglich des Stützpolsters kann das Federelement auf der dem Leitungselement zugewandten Seite des Stützpolsters angeordnet sein. Besonders zweckmäßig ist es aber, wenn das Federelement auf der dem Leitungselement abgewandten Seite des Stützpolsters angeordnet und auf der stützpolsterabgewandten Seite gegen das Stützrohr und/oder das Stützteil in Axialanlage ist. Diese Anordnung hat den Vorteil, daß die durch das Stützpolster gebildete Gelenkstelle möglichst nahe am Leitungselement sitzt, was der Lebensdauer des Leitungselementes zugute kommt.

Sind zwei Stützpolster nebeneinander angeordnet, so kann das Federelement zwischen diese gesetzt sein, um dadurch auf jeder Seite gegen eins der Stützpolster in Anlage zu sein, also bezüglich des Setz- und Verschleißverhaltens beide Stützpolster zu bedienen.

Hinsichtlich der Ausbildung des Federelementes kommen balgartige Elemente, Schraubenfedern oder dergleichen in Frage. Auch kann die eingangs erwähnte radiale Auffaltung des Stützrohres als Federelement ausgebildet sein. Besonders vorteilhaft ist es jedoch, daß das Federelement durch wenigstens eine Tellerfederscheibe aus Metall gebildet ist. Diese benötigt nur einen geringen Platz und liefert auf der anderen Seite eine Axialbeweglichkeit in einem hier ausreichenden Umfange.

Eine andere zweckmäßige Möglichkeit besteht darin, daß das Federelement durch wenigstens eine radial oder in Umfangsrichtung gewellte Ringscheibe gebildet ist. Auch eine solche Bauform benötigt wenig Platz und liefert auf der anderen Seite die notwendigen Stellgrößen.

Um dafür zu sorgen, daß die Einleitung der Federkraft beim Stützpolster möglichst im Bereich dessen radialer Mitte oder gleichmäßig über dessen radiale Ausdehnung verteilt erfolgt, kann vorgesehen sein, daß das Federelement wenigstens auf der dem Stützpolster zugewandten Seite in Anlage an eine zwischengesetzte Unterlegscheibe ist. Eine andere Möglichkeit besteht darin, daß die dem Federelement zugewandte Fläche des Stützpolsters der benachbarten Kontur des Federelementes angepaßt ist bzw. dieser entspricht.

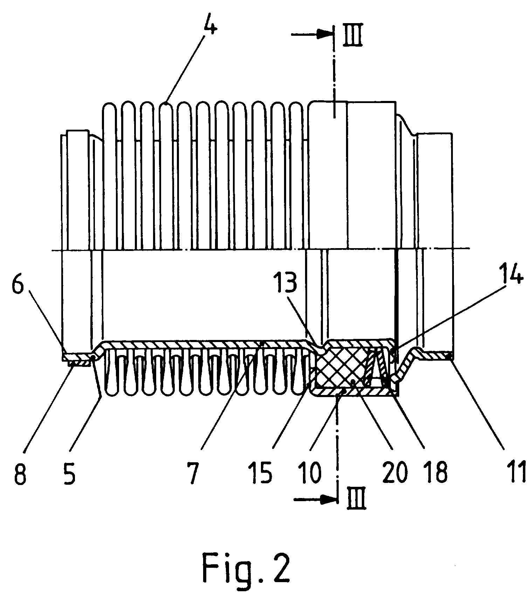

Weitere Merkmale und Einzelheiten der Erfindung ergeben sich aus den Ansprüchen 9 bis 13 sowie der nachfolgenden Beschreibung zweier Ausführungsformen, die in der Zeichnung mit den Figuren 1 bis 3 dargestellt sind, wobei Figur 3 eine Schnittansicht gemäß der Schnittlinie III-III in Figur 2 ist.

Figur 1 zeigt zwei Rohrteile 1, 2, deren koaxiale Enden aufeinander zugerichtet sind. Zwischen die Rohrteile 1, 2 ist als Kupplung ein insgesamt mit 3 bezeichnetes gelenkiges Verbindungselement eingesetzt, das grundsätzlich in beiden Richtungen vom Abgas durchströmt werden kann.

Das Verbindungselement besteht im wesentlichen aus einem ringförmig gewellten Metallbalg 4, der mit seinem zylindrischen Ende 5 auf das dortige freie Ende 6 eines Stützrohres 7 aufgesetzt und auf dem Ende 6 durch einen Endring 8 gehalten ist. Diese Einheit ist bei 9 mit dem Ende des eingesteckten Rohrteils 1 verschweißt.

Das andere Ende des Metallbalges 4 ist mit einem ringförmigen Stützteil 10 verschweißt, das mit einem eingesteckten und angeschweißten Anschlußteil 11 auf das Ende des Rohrteiles 2 aufgesetzt und bei 12 mit diesem verschweißt ist.

Das Stützrohr 7 ragt axial bis in das Stützteil 10, wo es mittels eines umlaufenden Wulstes 13 und einer endständigen Aufbördelung 14 zusammen mit dem Stützteil 10 eine Ringkammer bildet, die axial seitens des Stützteiles 10 durch dessen auf der Seite des Metallbalges 4 gelegene Einbördelung 15 und auf der Seite des Rohrteiles 2 durch das eingesetzte Anschlußteil 11 begrenzt ist.

In die Ringkammer sind zwei kreisringförmige Stützpolster 16, 17 mit gegenseitigem axialem Abstand eingesetzt, wobei sich das Stützpolster 16 axial gegen die Einbördelung 15 sowie den Wulst 13 und das Stützpolster 17 axial gegen die Aufbördelung 14 und das Anschlußteil 11 abstützen.

Zwischen die Stützpolster 16, 17 sind in den dort freien Raum zwei Tellerfedern 18 eingesetzt, die sich über Unterlegscheiben 19 gegen die Stützpolster 16, 17 in vorgespannter Anlage befinden.

Im Bereich der Stützpolster 16, 17 ist also mit Hilfe des Stützrohres 7 sowie des Stützteiles 10 eine Gelenkstelle gebildet, die den Rohrteilen 1, 2 eine gegenseitige angulare und begrenzte axiale Beweglichkeit erlaubt vermöge der Flexibilität des Metallbalges 4, der im übrigen die gasdichte Verbindung zwischen den Rohrteilen 1 und 2 aufrechterhält.

Durch das Vorhandensein der Tellerfedern 18 ist eine begrenzte gegenseitige Axialbeweglichkeit der Rohrteile 1, 2 gegeben, wobei die Tellerfedern 18 gleichzeitig auch für die Kompensation eines Setzens der Stützpolster 16, 17 sowie einer verschleißbedingten Lose innerhalb der Gelenkstelle sorgen. Durch geeignete Auswahl der Telerfedern 18 läßt sich dabei der Gelenkstelle bezüglich der gegenseitigen Axialbeweglich der Rohrteile 1 und 2 die notwendige Widerstandskraft geben. Damit die von den Telerfedern 18 auf die Stützpolster 16, 17 ausgeübte Kraft in diese möglichst großflächig einfließt, sind die zwischengesetzten Unterlegscheiben 19 vorgesehen.

Die Figuren 2 und 3 zeigen eine Variante des Gegenstandes gemäß Figur 1, wobei gleiche Teile mit gleichen Ziffern versehen sind und nicht noch einmal im einzelnen beschrieben werden.

Die Abweichung gegenüber Figur 1 besteht darin, daß in den durch das Ende des Stützrohres 7 sowie das Stützteil 10 gebildeten Ringraum auf diametral einander gegenüberliegenden Seiten kreissegmentförmige Stützpolster 20, 21 eingesetzt sind, die durch zwei Tellerfedern 18 axial vorgespannt sind, welche auf der dem Metallbalg 4 abgewandten Seite der Stützpolster 20, 21 sitzen und sich andererseits gegen das Anschlußteil 11 abstützen.

Zur großflächigen Krafteinleitung der Kraft der Tellerfedern 18 in die Stützpolster 20, 21 ist hier vorgesehen, daß letztere im Anlagebereich der Form der benachbarten Tellerfeder angepaßt sind.

Damit die Stützpolster 20, 21 ihre Position in Umfangsrichtung beibehalten, sind Haltebügel 22, 23 in das Stützteil 10 eingesetzt und mit diesem durch Punktschweißung verbunden, die mit nach radial innen gerichteten Stegen 24 bis 27 in Anlage an die Stützpolster 20, 21 sind. Selbstverständlich sind diese Haltebügel 22, 23 in ihrer Breite senkrecht zur Zeichenebene der Figur 3 so reduziert, daß sie die Arbeitsweise der an den Stützpolstern 20, 21 anliegenden Tellerfeder 18 nicht behindern.

Dadurch, daß die Tellerfedern 18 auf der dem Metallbalg 4 abgewandten Seite der Stützpolster 20, 21 sitzen, ist der Drehpunkt der Gelenkstelle möglichst weit in Richtung auf den Metallbalg gelegt. Durch die Anordnung von nur zwei Stützpolstern 20, 21 in Form von Ringsegmenten ist die Steifigkeit der Gelenkstelle gegen Angularbewegungen zwischen Stützrohr 7 und Stützteil 10 herabgesetzt bzw. steuerbar und es ist auf diese Weise auch Rücksicht auf eine bestimmte Winkelbeweglichkeit genommen, die im vorliegenden Falle bezogen auf die aus Figur 3 ersichtliche vertikale Drehachse erleichtert ist dadurch, daß im Bereich der Horizontalachse keine Stützpolster vorhanden sind.

## Patentansprüche

1. Gelenkiges Verbindungselement für Rohrteile (1, 2), insbesondere Rohrteile von Abgasleitungen der Verbrennungsmotore von Kraftfahrzeugen, bestehend aus mindestens einem flexiblen, wenigstens mittelbar mit den Rohrteilen dicht verbundenen Leitungselement (4) sowie einem innerhalb oder außerhalb des Leitungselementes angeordneten, mit den Rohrteilen zumindest mittelbar verbundenen Stützrohr (7), von dem wenigstens ein Ende mit dem diesem benachbarten Rohrteil über mindestens ein Stützpolster (16, 17, 20, 21) mit gedämpft federnden Eigenschaften sowie ein dieses umschließendes Stützteil (10) in angular zueinander beweglich geführter, gegenseitig tragender Verbindung steht, wobei das Stützpolster beidseits in Axial- und Radialrichtung gegen das Stützrohr und/oder das Stützteil in Anlage ist,
dadurch gekennzeichnet,
daß das Stützpolster (16, 17; 20, 21) durch wenigstens ein an ihm angreifendes, vorgespanntes Federelement (18) druckbeaufschlagt ist.

2. Verbindungselement nach Anspruch 1,
dadurch gekennzeichnet,
daß das Stützpolster (16, 17; 20, 21) in Axialrichtung und/oder Radialrichtung der gelenkigen Verbindung druckbeaufschlagt ist.

3. Verbindungselement nach Anspruch 1,
dadurch gekennzeichnet,
daß das Federelement (18) auf der dem Leitungselement (4) abgewandten Seite des Stützpolsters (20, 21) angeordnet und auf der stützpolsterabgewandten Seite gegen das Stützrohr (7) und/oder das Stützteil (10) in Axialanlage ist.

4. Verbindungselement nach Anspruch 1,
dadurch gekennzeichnet,
daß bei zwei axial nebeneinader angeordneten Stützpolstern (16, 17) das Federelement (18) zwischen diese gesetzt ist.

5. Verbindungselement nach einem der vorhergehenden Ansprüche,
dadurch gekennzeichnet,
daß das Federelement durch wenigstens eine Tellerfederscheibe (18) gebildet ist.

6. Verbindungselement nach einem der Ansprüche 1 bis 4,
dadurch gekennzeichnet,
daß das Federelement durch wenigstens eine radial oder in Umfangsrichtung gewellte Ringscheibe gebildet ist.

7. Verbindungselement nach einem der vorhergehenden Ansprüche,
dadurch gekennzeichnet,
daß das Federelement (18) wenigstens auf der dem Stützpolster (16, 17) zugewandten Seite in Anlage an eine zwischengesetzte Unterlegscheibe (19) ist.

8. Verbindungselement nach einem der Ansprüche 1 bis 6,
dadurch gekennzeichnet,
daß die dem Federelement (18) zugewandte Fläche des Stützpolsters (20, 21) der benachbarten Kontur des Federelementes angepaßt ist bzw. dieser entspricht.

9. Verbindungselement nach einem der vorhergehenden Ansprüche,
dadurch gekennzeichnet,
daß das Stützrohr mit jedem seiner Enden mit dem diesem benachbarten Rohrteil über mindestens ein Stützpolster mit gedämpft federnden Eigenschaften sowie ein dieses umschließendes Stützeil in angular zueinander beweglich geführter, gegenseitig tragender Verbindung steht.

10. Verbindungselement nach einem der vorhergehenden Ansprüche,
dadurch gekennzeichnet,
daß das Stützpolster durch zwei bezüglich der Gelenkachse diametral einander gegenüberliegende Stützpolster (20, 21) gebildet ist.

11. Verbindungselement nach Anspruch 10,
dadurch gekennzeichnet,
daß die Stützpolster (20, 21) als Ringsegmente ausgebildet sind.

12. Verbindungselement nach Anspruch 10 oder 11,
dadurch gekennzeichnet,
daß die Stützpolster (20, 21) in Umfangsrichtung des Verbindungselementes abgestützt sind.

13. Verbindugnselement nach Anspruch 12,
dadurch gekennzeichnet,
daß die Abstützung durch am Stützteil (10) befestigte Haltebügel (22, 23) gegeben ist, die mit radial gerichteten Stegen (24 bis 27) in Alage an die Stützpolster (20, 21) sind.

## Claims

1. Flexible connecting element for tubular parts (1, 2), in particular tubular parts of exhaust pipes of the internal combustion engines of motor vehicles, consisting of at least one flexible pipe element (4), which is at least indirectly tightly connected to the tubular parts, as well as a support tube (7), which is disposed inside or outside of the pipe element, is at least indirectly connected to the tubular parts and at least one end of which is connected via at least one support cushion (16, 17, 20, 21) having damped resilient properties as well as a support part (10), which surrounds the latter, to the tubular part which is adjacent to it in a mutually bearing manner and such that they can move angularly with respect to one another, the support cushion bearing against the support tube and/or the support part on both sides in the axial and the radial direction, characterised in that the support cushion (16, 17; 20, 21) is subjected to pressure by at least one preloaded spring element (18) acting on it.

2. Connecting element according to claim 1, characterised in that the support cushion (16, 17; 20, 21) is subjected to pressure in the axial direction and/or the radial direction of the flexible connection.

3. Connecting element according to claim 1, characterised in that the spring element (18) is disposed on the side of the support cushion (20, 21) which is remote from the pipe element (4) and bears axially against the support tube (7) and/or the support part (10) on the side which is remote from the support cushion.

4. Connecting element according to claim 1, characterised in that when two support cushions (16, 17) are disposed axially next to one another the spring element (18) is placed between these.

5. Connecting element according to one of the preceding claims, characterised in that the spring element is formed by at least one Belleville washer (18).

6. Connecting element according to one of claims 1 to 4, characterised in that the spring element is formed by at least one annular disc which is corrugated radially or in the circumferential direction.

7. Connecting element according to one of the preceding claims, characterised in that the spring element (18) bears against an interposed washer (19), at least on the side which faces the support cushion (16, 17).

8. Connecting element according to one of claims 1 to 6, characterised in that the surface of the support cushion (20, 21) which faces the spring element (18) is adapted to the adjacent contour of the spring element or corresponds to this contour.

9. Connecting element according to one of the preceding claims, characterised in that the support tube is connected at each of its ends via at least one support cushion having damped resilient properties as well as a support part, which surrounds the latter, to the tubular part which is adjacent to it in a mutually bearing manner and such that they can move angularly with respect to one another.

10. Connecting element according to one of the preceding claims, characterised in that the support cushion is formed by two support cushions (20, 21) which are disposed diametrically opposite one another relative to the joint axis.

11. Connecting element according to claim 10, characterised in that the support cushions (20, 21) are formed as annular segments.

12. Connecting element according to claim 10 or 11,. characterised in that the support cushions (20, 21) are supported in the circumferential direction of the connecting element.

13. Connecting element according to claim 12, characterised in that the support is provided by retaining clips (22, 23) which are secured to the support part (10) and which bear against the support cushions (20, 21) with radially directed legs (24 to 27).

## Revendications

1. Elément de liaison articulé pour des éléments tubulaires (1, 2), notamment des éléments tubulaires de conduites d'échappement des moteurs thermiques de véhicules automobiles, constitué d'au moins un élément de conduite flexible (4), relié en étanchéité au moins indirectement aux éléments tubulaires, ainsi que d'un tube de soutien (7) disposé à l'intérieur ou à l'extérieur de l'élément de conduite et relié au moins indirectement aux éléments tubulaires, tube dont au moins une extrémité se trouve, par l'intermédiaire d'au moins une garniture de soutien (16, 17, 20, 21) présentant des propriétés d'amortissement élastique et d'un élément de soutien (10) entourant cette garniture, en liaison mutuellement porteuse, guidée en mobilité angulaire relative, avec l'élément tubulaire voisin de cette extrémité, la garniture de soutien se trouvant des deux côtés en application, en direction axiale et en direction radiale, contre le tube de soutien et/ou l'élément de soutien, **caractérisé** en ce que la garniture de soutien (16, 17, 20, 21) est sollicitée en pression par au moins un élément de ressort précontraint (18) agissant sur elle.

2. Elément de liaison selon la revendication 1, **caractérisé** en ce que la garniture de soutien (16, 17, 20, 21) est sollicitée en pression dans la direction axiale et/ou dans la direction radiale de la liaison articulée.

3. Elément de liaison selon la revendication 1, **caractérisé** en ce que l'élément de ressort (18) est disposé sur le côté de la garniture de soutien (20, 21) qui est opposé à l'élément de conduite (4) et se trouve, sur le côté opposé à la garniture de soutien, en application axiale contre le tube de soutien (7) et/ou l'élément de soutien (10).

4. Elément de liaison selon la revendication 1, **caractérisé** en ce qu'en présence de deux garnitures de soutien (16, 17) axialement juxtaposées, l'élément de ressort (18) est placé entre ces dernières.

5. Elément de liaison selon une des revendications précédentes, **caractérisé** en ce que l'élément de ressort est formé par au moins un disque-ressort ou rondelle-ressort (18).

6. Elément de liaison selon une des revendications 1 à 4, **caractérisé** en ce que l'élément de ressort est formé par au moins une couronne ondulée radialement ou en direction circonférentielle.

7. Elément de liaison selon une des revendications précédentes, **caractérisé** en ce que l'élément de ressort (18) se trouve, au moins sur le côté tourné vers la garniture de soutien (16, 17), en application contre une rondelle plate intercalée (19).

8. Elément de liaison selon une des revendications 1 à 6, **caractérisé** en ce que la face de la garniture de soutien (20, 21) qui est tournée vers l'élément de ressort (18) est adaptée au contour voisin de l'élément de ressort ou encore correspond à ce dernier.

9. Elément de liaison selon une des revendications précédentes, **caractérisé** en ce que chacune des extrémités du tube de soutien se trouve, par l'intermédiaire d'au moins une garniture de soutien présentant des propriétés d'amortissement élastique et d'un élément de soutien entourant cette garniture, en liaison mutuellement porteuse, guidée en mobilité angulaire relative, avec l'élément tubulaire voisin de cette extrémité.

10. Elément de liaison selon une des revendications précédentes, **caractérisé** en ce que la garniture de soutien est formée par deux garnitures de soutien (20, 21) diamétralement opposées par rapport à l'axe d'articulation.

11. Elément de liaison selon la revendication 10, **caractérisé** en ce que les garnitures de soutien (20, 21) sont réalisées sous la forme de segments annulaires.

12. Elément de liaison selon la revendication 10 ou 11, **caractérisé** en ce que les garnitures de soutien (20, 21) sont supportées dans la direction circonférentielle de l'élément de liaison.

13. Elément de liaison selon la revendication 12, **caractérisé** en ce que le support est assuré par des étriers de retenue (22, 23) fixés sur l'élément de soutien (10), qui se trouvent en application contre les garnitures de soutien (20, 21) par des branches (24 à 27) orientées radialement.
